# FASCICULE DE BREVET EUROPEEN

(11) **EP 3 771 584 B1**
(45) Date de publication et mention de la délivrance du brevet: **04.05.2022**
(21) Numéro de dépôt: 20188432.7
(22) Date de dépôt: 29.07.2020
(51) Int. Cl.: B60K 6/48, B60K 6/387, B60K 6/405

(54) **DISPOSITIF DE TRANSMISSION DE COUPLE**
VORRICHTUNG ZUR DREHMOMENTÜBERTRAGUNG
TORQUE TRANSMISSION DEVICE

(30) Priorité: 02.08.2019 FR 1908903
(43) Date de publication de la demande: 03.02.2021
(73) Titulaire: VALEO EMBRAYAGES, 80009 Amiens (FR)
(72) Inventeur: LEBAS, Gilles, 98892 CERGY PONTOISE (FR); COMMEINE, Emmanuel, 95892 CERGY PONTOISE (FR)
(74) Mandataire: Valeo Powertrain Systems

(56) Documents cités:
- WO-A2-2019/102099
- DE-A1-102011 080 161
- DE-A1-102016 223 277
- DE-A1-102019 108 001

## Description

La présente invention se rapporte au domaine des transmissions pour véhicules automobiles. Elle se rapporte notamment à dispositif de transmission de couple destiné à être disposé dans la chaine de traction d'un véhicule automobile, entre un moteur thermique et une boîte de vitesses. La présente invention concerne également un module de transmission hybride comprenant un tel dispositif de transmission ainsi qu'une machine électrique.

L'invention concerne en particulier les dispositifs de transmission pour un véhicule automobile de type hybride dans lequel une machine électrique tournante est disposée dans la chaine de traction.

Lors du transport de dispositifs de transmission de couple, il est primordial que les éléments constitutifs du dispositif constituent un ou des ensembles indissociables. Ces ensembles doivent en particulier résister au moins aux conditions de mise en caisse avant livraison, résistance aux chocs et/ou accélération durant le transport et manipulations pendant ou après livraison ou durant l'assemblage ou tout autre manipulation.

Les exigences fonctionnelles que doivent garantir de tels ensembles sont les suivantes :
- ne pas perdre de pièces,
- ne pas permettre un mouvement interne irréversible, et
- ne pas permettre un déplacement interne endommageant une ou plusieurs pièces.

Document WO2019102099A2 décrit un dispositif de transmission de couple destiné à être disposé dans la chaîne de traction d'un véhicule automobile, entre un moteur à combustion interne et une boîte de vitesses. Il est connu de l'art antérieur des mécanismes à triple embrayage constitués de plusieurs sous assemblages autonomes et sans jeux internes ou avec des jeux maitrisés à l'assemblage. Le triple embrayage comprend typiquement un mécanisme à double embrayage humide pour un véhicule automobile comprenant des moyens d'entrée de couple, un premier arbre de sortie de couple, un second arbre de sortie de couple, un premier embrayage apte à coupler ou découpler les moyens d'entrée de couple et le premier arbre de sortie de couple, un deuxième embrayage apte à coupler ou découpler les moyens d'entrée de couple et le second arbre de sortie de couple

De tels mécanismes comportent un empilage axial de pièces tournantes ou fixes comprises entre un appui fixe coté boite de vitesse et un appui fixe côté dispositif d'amortissement ou moteur thermique. Ces pièces sont maintenues :
- radialement par leurs formes propres,
- axialement par les effort internes des pièces constitutives (ressorts)
- par des circlips et/ou des soudures, et
- lors de l'assemblage des sous-ensembles entre eux.

Les pièces sont fabriquées avec des cotes assurant l'assemblage des pièces et la réalisation des fonctions une fois montés dans le véhicule. Lorsque les pièces sont assemblées en sous ensemble, les pièces sont agencées de façon à respecter les chaines de cotes d'assemblage et fonctionnelles. On obtient alors des sous-ensembles fonctionnels. Ceux-ci lors de leur assemblage final doivent aussi respecter un certain nombre de chaines de cotes assurant les fonctionnalités demandées.

Dans ce cas les chaines de cotes demandent des jeux internes minimal pour éviter des coincements internes ou des frottements préjudiciables au fonctionnement et maximal pour éviter que des jeux trop importants permettent le déplacement/coincement de certaines pièces lors des phases ultérieures à l'assemblage.

En effet, certains éléments présents dans le dispositif comme les organes de roulement (en particulier les butées à aiguilles assemblées entre les sous-ensembles) permettent aux pièces de tourner librement les unes par rapport aux autres. Elles doivent être maintenues radialement et axialement. Ce maintien permet d'éviter leur déplacement radial/axial vers une position non voulue qui pourrait interdire l'assemblage ultérieure ou endommager celles-ci ou d'autres pièces lors de l'assemblage final.

L'assemblage sur le véhicule doit garantir que les pièces et sous-ensembles soient en position pour répondre aux exigences fonctionnelles c'est-à-dire que les chaines de cotes fonctionnelles sont respectées. Les pièces constitutives des chaines de cotes sont alors considérées comme en appui sur un côté car l'assemblage force les pièces à être dans cet état d'appui. Maintenant si l'effort d'assemblage n'existe pas (cas avant assemblage final sur véhicule), les pièces sont alors dans une position intermédiaire entre toutes les positions possibles. Elles peuvent être dans une position ne répondant pas aux exigences fonctionnelles avant montage comme vues précédemment.

Il faut donc garantir quelques soient les phases de vie entre l'assemblage du dispositif de transmission de couple en tant que tel et l'assemblage final dans le véhicule, que les pièces satisfassent toutes les exigences fonctionnelles.

L'invention a notamment pour but d'apporter une solution simple, efficace et économique à ce problème.

L'invention y parvient, selon l'un de ses aspects, à l'aide d'un dispositif de transmission de couple, notamment pour véhicule automobile, comprenant :
- un premier sous-ensemble comprenant un embrayage d'entrée et un élément d'entrée de couple en rotation autour d'un axe X, apte à être couplé en rotation à un vilebrequin d'un moteur thermique,
- un support solidaire en rotation d'une machine électrique, ledit support étant relié sélectivement à l'élément d'entrée par l'embrayage d'entrée,
- un deuxième sous-ensemble comprenant un premier et un deuxième élément de sortie de couple aptes à être couplés respectivement en rotation à un premier et un deuxième arbre d'entrée d'une boite de vitesses,
- un troisième sous-ensemble comprenant un moyeu principal et un premier et deuxième embrayage de sortie agencés entre l'élément d'entrée de couple et les éléments de sortie de couple au sens de la transmission de couple,
ledit support formant une cloche enveloppant au moins en partie lesdits sous-ensemble,
le dispositif comprenant en outre au moins un élément de calage disposé à l'intérieur du support et configuré pour limiter le déplacement des sous-ensembles les uns par rapport aux autres.

Compte tenu du nombre important de pièces dans un mécanisme à triple embrayage, le jeu fonctionnel possible entre les pièces peut être supérieur au jeu fonctionnel admissible pour garantir les exigences fonctionnelles. Le dispositif de la présente invention présente ainsi l'avantage de réduire artificiellement le jeu en ayant recours à un calage interne des pièces limitant le mouvement axial des pièces libres avant livraison et assemblage final.

Avantageusement, le dispositif de transmission de couple selon la présente invention comprend un unique élément de calage. En effet, un seul élément de calage choisi parmi différentes positions peut suffire car il s'agit de combler un jeu dans un ensemble de pièces afin de limiter le déplacement axial des sous-ensembles les uns par rapport aux autres.

Dans la suite de la description et les revendications, on utilisera à titre non limitatif et afin d'en faciliter la compréhension, les termes « avant » AV ou « arrière » AR selon la direction par rapport à une orientation axiale déterminée par l'axe X principal de rotation de la transmission du véhicule automobile « l'avant » désignant la partie située à gauche des figures, du côté du moteur, et « l'arrière » désignant la partie droite des figures, du côté de la transmission; et « intérieur /interne » ou « extérieur / externe » par rapport à l'axe X et suivant une orientation radiale, orthogonale à ladite orientation axiale, « l'intérieur » désignant une partie proximale de l'axe longitudinal X et « l'extérieur » désignant une partie distale de l'axe longitudinal X.

Au sens de l'invention, l'au moins un élément de calage est donc situé dans le volume interne du support. Dans le cadre de la présente invention, la succession radiale se comprend en termes de distance radiale et la succession axiale se comprend en termes de distance axiale.

Avantageusement, l'au moins un élément de calage est fixé sur le support, de préférence une paroi radiale du support, ou sur un élément solidaire en rotation du moyeu principal et appartenant au troisième sous-ensemble.

Avantageusement, l'au moins un élément de calage est disposé dans un espace située axialement entre une paroi radiale du support et une pièce lui faisant face axialement. La paroi radiale du support et la pièce lui faisant face axialement présentent donc un espace, c'est-à-dire un jeu qui est occupé par l"au moins un élément de calage.

Le support présente de préférence trois parois radiales reliées entre-elles par des parois axiales.

Avantageusement, la pièce faisant face axialement à la paroi radiale du support est un élément solidaire en rotation du moyeu principal et appartenant au troisième sous-ensemble. De préférence, toute pièce solidaire en rotation du moyeu principal appartient au troisième sous-ensemble.

Avantageusement, l'élément solidaire en rotation du moyeu principal et appartenant au troisième sous-ensemble est choisi parmi un porte-disque d'entrée, un moyen de rattrapage du désalignement et une paroi d'une chambre d'équilibrage du deuxième embrayage de sortie. Le porte-disque d'entrée est de préférence un porte-disque d'entrée commun aux deux embrayages de sortie.

Avantageusement, le dispositif comprenant en outre un moyen de rattrapage du désalignement radial et/ou angulaire. Cette architecture permet ainsi d'absorber l'éventuel désalignement entre les deux pièces qu'il sépare soit parce que ces dernières sont portées par deux pièces ayant des axes de rotation différents soit parce qu'elles sont portées par deux pièces ayant des axes concentriques mais dans lesquels il existe un nombre d'éléments importants séparant ces deux pièces.

Dans les développements actuels des véhicules hybrides, en particulier lorsque la machine électrique tournante est sur un axe parallèle à l'axe de rotation du dispositif de transmission de couple, il convient d'absorber l'éventuel désalignement entre deux éléments. Les désalignements peuvent être dus à au moins trois facteurs principaux par exemple lorsque deux arbres ne sont pas concentriques comme pour un arbre de boite de vitesses par rapport à un arbre de moteur thermique ou comme pour un arbre de boite de vitesses et un arbre d'une machine électrique tournante déportée, ou lorsque deux arbres sont théoriquement concentriques mais ne le sont pas à cause d'un nombre importants de pièces entre les deux. Le troisième facteur est l'effet dynamique du passage du couple ou de la centrifugation sur les arbres de boite, les efforts de denture dans la boite déformant les arbres de boite. En effet, ces pièces ayant des tolérances de positionnement ou de formes, l'ensemble de la chaine de cote qui définit la position relative des deux arbres fait qu'il peut exister un désalignement. Il est important d'absorber le désalignement entre deux pièces pour des raisons de diminutions des bruits et de réduction de l'usure des pièces.

Avantageusement, l'élément de calage et la paroi radiale du support ou l'élément de calage et l'élément solidaire en rotation du moyeu principal et appartenant au troisième sous-ensemble forment une seule et même pièce ou deux pièces solidaires, par exemple assemblées par soudure. Lorsque l'élément de calage forme une seule et même pièce avec la pièce sur laquelle il est fixé, l'élément de calage peut être obtenu par déformation initiale ou finale de la pièce.

Avantageusement, le support enveloppe intégralement l'embrayage d'entrée et le premier et deuxième embrayage de sortie. Tous les embrayages du dispositif se retrouvent donc dans le volume interne du support.

Avantageusement, le dispositif comprend en outre une roue dentée, ladite roue dentée et le support formant ensemble un grand pignon. Le support permet donc de supporter la roue dentée. De préférence, la roue dentée et le support formant le grand pignon sont deux pièces assemblées entre elles par exemple par soudure. Alternativement, la roue dentée et le support forment une seule et même pièce.

Avantageusement, le dispositif comprend en outre deux organes de roulement disposés au contact du support. De préférence, le premier organe de roulement est disposé radialement entre l'extrémité intérieur d'une paroi radiale du support et l'élément d'entrée de couple et le deuxième organe de roulement est disposé radialement entre l'extrémité intérieur d'une autre paroi radiale du support et le moyeu principal.

De manière encore plus préférée, le premier organe de roulement est porté par une première paroi fixe apte à être fixée directement ou indirectement sur une deuxième paroi fixe de la machine électrique ou sur un carter de boite de vitesses, le deuxième organe de roulement étant quant à lui porté par la deuxième paroi fixe. Grace à cette architecture, les efforts générés par la machine électrique tournante sont directement repris par le carter de la machine électrique tournante et/ou le carter de la boite de vitesses, ce qui simplifie la chaine de côtes du dispositif de transmission de couple.

Le premier organe de roulement et le deuxième organe de roulement sont des liaisons rotules et assurent conjointement une liaison pivot indispensable au bon guidage de la machine électrique tournante. En effet, l'étude cinématique d'un organe de roulement (de manière générale un roulement à une rangée de billes) conduit à modéliser ce composant par une liaison rotule. Les actions mécaniques transmissibles par les contacts entre les billes et les bagues sont essentiellement radiales ou obliques et concourantes en un même point. Le torseur des actions mécaniques transmissibles par un roulement s'apparente donc à celui d'une liaison rotule.

La première paroi fixe de l'embrayage d'entrée, qui pourra également être appelé carter de protection dans le cadre de la présente invention, est fixée directement ou indirectement sur la deuxième paroi fixe de la machine électrique ou sur le carter de boite de vitesses par l'intermédiaire de moyens de fixation, par exemple de type vis ou rivet.

Selon un aspect de l'invention, le premier organe de roulement comporte une bague intérieure en contact avec la première paroi fixe et une bague extérieur en contact avec une paroi radiale du support. Le deuxième organe de roulement comporte une bague extérieure en contact avec une paroi radiale du support et une bague intérieure en contact avec la deuxième paroi fixe de la machine électrique. Avantageusement, le premier et deuxième organe de roulement est un roulement à une rangée de billes.

Au sens de la présente demande, le premier embrayage de sortie est celui situé radialement à l'extérieur, c'est-à-dire le plus loin de l'axe de rotation X du dispositif. Le deuxième embrayage de sortie étant celui situé radialement à l'intérieur, c'est-à-dire le plus proche de l'axe de rotation du dispositif.

L'invention a également pour objet un module de transmission hybride comprenant un dispositif de transmission de couple selon la présente invention et une machine électrique tournante, le support étant relié à la machine électrique tournante de sorte que l'axe de rotation de la machine électrique tournante soit décalé de l'axe de rotation du dispositif de transmission de couple.

La machine électrique est alors dite « off-line ». Cette disposition permet de positionner la machine électrique en fonction de l'espace disponible dans la chaine de traction du véhicule. Cette disposition permet notamment de ne pas avoir à disposer la machine électrique axialement à la suite des embrayages, ce qui serait négatif pour la compacité axiale. Cette disposition permet notamment de ne pas avoir à disposer la machine électrique radialement au-delà des embrayages, ce qui serait négatif pour la compacité radiale.

Avantageusement, le dispositif de transmission de couple selon la présente invention est connecté à un moteur électrique 48V ou haute tension avec un jeu d'engrenages.

Selon l'invention, les embrayages, à savoir l'embrayage d'entrée et le premier et deuxième embrayage de sortie peuvent être de type multidisque. Dans le cadre de l'invention, un ensemble multidisque est un ensemble comprenant au moins un disque de friction solidaire en rotation de l'un des porte-disque d'entrée et de sortie, au moins deux plateaux respectivement disposés de part et d'autre de chaque disque de friction, solidaires en rotation de l'autre des porte-disque d'entrée et de sortie et des garnitures de friction disposées entre les plateaux et un disque de friction, les embrayages décrivant une position débrayée et une position embrayée dans laquelle lesdits plateaux et le disque de friction pincent les garnitures de friction de manière à transmettre un couple entre un porte-disque d'entrée et un porte-disque de sortie.

De préférence, l'embrayage comporte entre deux et sept disques de friction, de préférence quatre disques de friction.

Selon une caractéristique de l'invention, les embrayages d'entrée et de sortie sont humides. Les embrayages étant contenus dans au moins une chambre étanche remplie d'un fluide, notamment de l'huile. Au sens de la présente demande, un embrayage humide est un embrayage qui est adapté pour fonctionner dans un bain d'huile.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées.

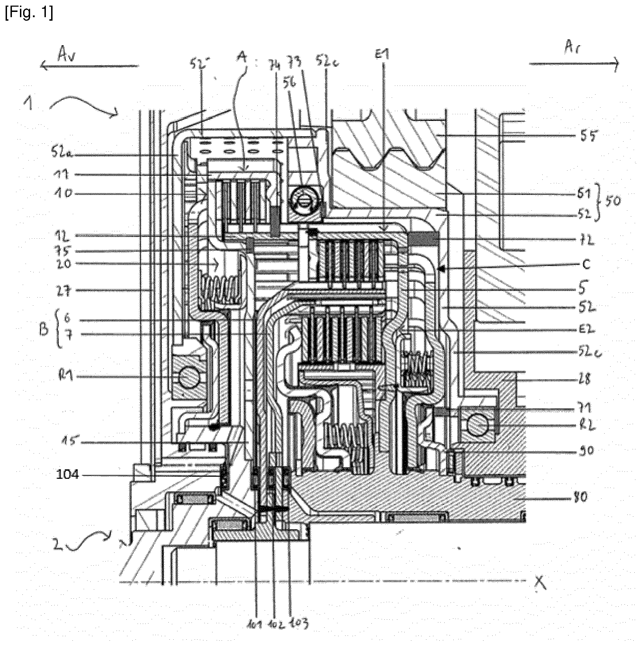

[Fig. 1] représente une vue en coupe axiale d'un dispositif de transmission de couple selon l'invention.

En relation avec la figure 1, on observe un dispositif de transmission de couple 1 comprenant :
- un premier sous-ensemble A comprenant un embrayage d'entrée 10 et un élément d'entrée de couple 2 en rotation autour d'un axe X, apte à être couplé en rotation à un vilebrequin d'un moteur thermique (non représenté mais situé à l'avant du dispositif 1 de transmission de couple),
- un support 52 solidaire en rotation d'une machine électrique, ledit support 52 étant relié sélectivement à l'élément d'entrée 2 par l'embrayage d'entrée 10,
- un deuxième sous-ensemble B comprenant un premier et un deuxième élément de sortie de couple 6, 7, aptes à être couplés respectivement en rotation à un premier et un deuxième arbre d'entrée d'une boite de vitesses (non représenté mais situé à l'arrière du dispositif 1 de transmission de couple), et
- un troisième sous-ensemble C comprenant un moyeu principal 80, un premier et un deuxième embrayage de sortie E1, E2 agencés entre l'élément d'entrée de couple 2 et les éléments de sortie de couple 6, 7 au sens de la transmission de couple et un porte disque d'entrée 5 commun aux deux embrayages de sortie E1, E2. Le porte-disque d'entrée 5 disposé entre l'élément d'entrée de couple 2 et le premier et deuxième élément de sortie de couple 6, 7 au sens de la transmission de couple. Le porte-disque d'entrée commun 5 aux embrayages de sortie E1 et E2 est solidairement fixé par soudure au moyeu principal 80.

Dans l'exemple considéré, le premier élément de sortie 6 est disposé en parallèle du deuxième élément de sortie 7 au sens de la transmission de couple. Chacun de ces éléments tourne autour d'un axe de rotation X du dispositif.

Le premier et deuxième élément de sortie 6, 7 comprennent des interfaces de sortie dont la périphérie interne est cannelée et apte à coopérer, respectivement avec un premier et un deuxième arbre de boite de vitesses.

Dans l'exemple considéré, le premier sous-ensemble A correspond donc à l'embrayage d'entrée 10 également appelé embrayage de séparation et les moyens d'entrée de couple tel que l'élément d'entrée 2. Comme on le verra plus en détails, ce sous-ensemble A comprend également les moyens d'actionnement de l'embrayage d'entrée 10.

Avantageusement, le sous-ensemble B consiste uniquement en un premier et un deuxième élément de sortie de couple 6, 7.

Enfin, le troisième sous-ensemble C correspond au dispositif dit à double embrayage comprenant les deux embrayages de sortie E1 et E2. Dans l'exemple considéré, toute pièce relié de manière solidaire en rotation au moyeu principal 80 est considérée comme faisant partie de ce sous-ensemble C. Comme on le verra plus en détails ci-après, cela comprend donc les moyens d'actionnements du double embrayage.

Un dispositif d'amortisseur de torsion (non représenté) peut être positionné entre le vilebrequin du moteur thermique et l'élément d'entrée de couple 2.

Dans l'exemple considéré, l'embrayage d'entrée 10 accouple sélectivement et par friction l'élément d'entré de couple 2 et le porte-disque d'entrée 5 au sens de la transmission de couple. Ainsi, l'embrayage d'entrée 10 comprend :
- un porte-disque d'entrée 11 solidaire en rotation du premier élément d'entrée de couple 2 par l'intermédiaire d'un voile d'entrée 15,
- un porte-disque de sortie 12 solidaire en rotation du porte-disque d'entrée 5, et
- un ensemble multidisque comprenant plusieurs disques de friction, ici trois, solidaires en rotation du porte-disque de sortie 12, plusieurs plateaux respectivement disposés de part et d'autre de chaque disque de friction, solidaires en rotation du porte-disque d'entrée 11 et des garnitures de friction disposées entre les plateaux et un disque de friction, fixées de chaque côté des disques de friction, l'embrayage 10 décrivant une position débrayée et une position embrayée dans laquelle lesdits plateaux et le disque de friction pincent les garnitures de friction de manière à transmettre un couple entre le porte-disque d'entrée et le porte-disque de sortie.

Chaque porte-disque 11, 12 synchronise en rotation l'ensemble des plateaux et l'ensemble des disques de friction. Chaque portes-disque 11, 12 comporte une jupe cylindrique sur lesquelles sont montées les plateaux et les disques de friction.

Les disques de friction de l'ensemble multidisque coopèrent avec la jupe cylindrique du porte-disque de sortie 12 selon leur périphérie radialement intérieure par cannelures. Les disques de friction sont donc radialement à l'extérieur de la jupe cylindrique.

Les plateaux de l'ensemble multidisque coopèrent avec la jupe cylindrique du porte-disque de d'entrée 11 selon leur périphérie radialement extérieure par cannelures. Les plateaux sont donc radialement à l'intérieur de la jupe cylindrique.

L'élément d'entrée de couple 2 permet l'agencement d'un système d'actionnement 20 associé à l'embrayage d'entrée 10.

Dans l'exemple considéré, le premier embrayage de sortie E1 accouple sélectivement et par friction le porte-disque d'entrée 5 et le deuxième élément de sortie de couple 6 et le deuxième embrayage de sortie E2, accouple sélectivement et par friction le porte-disque d'entrée 5 et le troisième élément de sortie de couple 7. Le porte-disque d'entrée 5 est ainsi un porte-disque d'entrée commun aux deux embrayages de sortie E1, E2.

De manière analogue à l'embrayage d'entrée 10, le premier embrayage de sortie E1 et le deuxième embrayage de sortie E2 comprennent :
- le porte-disque d'entrée 5 commun aux deux embrayages de sotie E1, E2,
- un porte-disque de sortie solidaire en rotation du premier élément de sortie 6 (pour l'embrayage E1) ou solidaire en rotation du deuxième élément de sortie 7 (pour l'embrayage E2) et,
- un ensemble multidisque comprenant plusieurs disques de friction, ici quatre (pour l'embrayage E1) et cinq (pour l'embrayage E2), solidaires en rotation du porte-disque de sortie, plusieurs plateaux respectivement disposés de part et d'autre de chaque disque de friction, solidaires en rotation du porte-disque d'entrée et des garnitures de friction disposées entre les plateaux et un disque de friction, fixées de chaque côté des disques de friction, les embrayages E1 et E2 décrivant une position débrayée et une position embrayée dans laquelle lesdits plateaux et le disque de friction pincent les garnitures de friction de manière à transmettre un couple entre le porte-disque d'entrée et le porte-disque de sortie.

De manière commune aux trois embrayages 10, E1 et E2, les garnitures peuvent être fixées sur les disques de friction, notamment par collage, notamment par rivetage, notamment par surmoulage. En variante, les garnitures sont fixées sur les plateaux.

Chaque porte-disque peut synchroniser en rotation l'ensemble des plateaux ou l'ensemble des disques de friction.

Selon un aspect de l'invention, les plateaux peuvent être solidaires en rotation du porte-disque d'entrée et les disques de friction peuvent être solidaires du porte-disque de sortie. En variante, les plateaux peuvent être solidaires en rotation du porte-disque de sortie. Les disques peuvent être solidaires en rotation du porte-disque d'entrée.

Les embrayages sont de type humide et comportent entre deux et sept disques de friction, de préférence quatre disques de friction. De tels embrayages multi-disques permettent de limiter la hauteur radiale de limiter l'étendue axiale.

Les embrayages de sortie E1, E2 peuvent être agencés pour ne pas être simultanément dans la même configuration embrayée. En revanche, ils peuvent simultanément être configurés dans leur position débrayée.

Le dispositif 1 comprend en outre une première paroi fixe 27, également appelé carter de protection 27. Ce carter 27 est agencé pour envelopper au moins partiellement les trois sous ensemble A, B et C, à savoir en particulier l'élément d'entrée de couple 2, le premier et deuxième élément de sortie de couple 6, 7, l'embrayage d'entrée 10 et les embrayages de sortie E1, E2.

Le carter 27 est composé d'une paroi radiale et d'une paroi interne s'étendant axialement autour de l'axe X et présente une forme générale sensiblement en « L », la base du « L » étant située du côté de l'axe de rotation X. Le carter comprend un réseau de passage d'un fluide agencé pour alimenter en fluide ledit système d'actionnement 20. Ainsi, le réseau de passage de fluide permet de conduire le fluide par gravité ou au moyen d'un appareil assurant l'écoulement du fluide, tel qu'une pompe ou un actionneur, vers le système d'actionnement 20.

Avantageusement, le carter 27 peut-être fixé au moteur à combustion interne ou au moteur de la machine électrique par l'intermédiaire de moyens de fixation, par exemple de type vis ou rivet visibles.

L'étanchéité du carter 27 est assuré au moyen d'une série de joints d'étanchéité. Les joints d'étanchéités utilisés dans le cadre de la présente invention peuvent être des joints d'étanchéité dynamiques à lèvres.

Dans l'exemple considéré, le moyeu principal 80 supporte le premier et deuxième embrayage de sortie E1, E2 par l'intermédiaire du porte-disque d'entrée commun 5. Le moyeu principal 80 est donc couplé en rotation à l'élément d'entrée de couple 2. Lorsque l'élément d'entrée de couple 2 est couplé à un arbre moteur entrainé en rotation par le vilebrequin d'un moteur, tel que décrit précédemment, et que l'embrayage 10 est fermé, alors le moyeu principal 80 est animé d'un mouvement de rotation analogue à celui de l'arbre moteur.

Comme illustré sur la figure 1, le premier embrayage de sortie E1 est disposé radialement au-dessus du deuxième embrayage de sortie E2.

De préférence, l'embrayage d'entrée 10, le premier embrayage E1 et le deuxième embrayage E2 (ci-après « les embrayages ») sont à l'état ouvert, encore dit « normalement ouvert », et sont actionnés sélectivement en fonctionnement par un dispositif de commande (non représenté) pour passer de l'état ouvert à l'état fermé.

Les embrayages sont chacun commandés par un système d'actionnement agencé pour pouvoir configurer les embrayages dans une configuration quelconque comprise entre la configuration embrayée et la configuration débrayée.

Pour commander sélectivement le changement d'état des embrayages, le dispositif de commande gère l'alimentation en huile. Le dispositif de commande est raccordé au carter de protection 27 qui comprend le réseau de passage de fluide ainsi qu'au moyeu principal 80 qui comporte des canaux non visibles sur les plans de coupe de la figure 1.

Chaque système d'actionnement comprend :
- une chambre de pression agencée pour recevoir un fluide pressurisé,
- un piston mobile axialement à l'intérieur de la chambre de pression,
- une chambre d'équilibrage située à l'opposé de la chambre de pression par rapport au piston.

Chaque système d'actionnement comprend en outre un élément de rappel élastique, agencé pour générer un effort axial s'opposant au déplacement du piston correspondant pour embrayer l'embrayage 10, E1, E2 correspondant. Ceci permet de rappeler automatiquement le piston en position débrayée, correspondant à un état ouvert de l'embrayage. Dans cette position, le piston libère axialement l'ensemble multidisque correspondant qui ne transmet alors plus de couple en direction du premier arbre d'entrée d'une boite de vitesse ou du deuxième arbre d'entrée d'une boite de vitesses.

Chaque piston est disposé axialement entre une chambre de pression et une chambre d'équilibrage. Les pistons prennent la forme d'une tôle ondulée et sont incurvés axialement vers l'avant AV ou vers l'arrière AR. Des appuis extérieurs s'étendent parallèlement à l'axe longitudinal X.

À titre d'exemple non limitatif, les pistons peuvent être obtenus par emboutissage.

Les chambres de pression des systèmes d'actionnement sont agencées pour recevoir un certain volume de fluide hydraulique sous pression afin de générer un effort axial sur un piston et de configurer ainsi l'embrayage correspondant dans l'une des configurations décrites précédemment. La chambre de pression qui génère l'effort du piston est associée à une chambre d'équilibrage agencée pour recevoir un certain volume de fluide hydraulique. Le fluide, du type de lubrification ou de refroidissement est avantageusement acheminé par l'intermédiaire de conduits de circulation fluidiques basse pression (non représentées sur le plan de coupe).

A chaque système d'actionnement est associé un élément de rappel élastique. Avantageusement, l'élément de rappel élastique est une rondelle Belleville ou est composé de ressorts hélicoïdaux.

Dans l'exemple considéré, le dispositif de transmission de couple comprend en outre quatre paliers 101, 102, 103, 104.

Un premier palier axial 101 est interposé entre l'élément d'entrée de couple 2 et l'élément de sortie 6 afin de supporter les efforts axiaux de l'élément d'entrée de couple 2 malgré les vitesses de rotation différentes auxquelles peuvent respectivement tourner l'arbre d'entrée et le premier arbre de transmission.

Un deuxième palier axial 102 est intercalé axialement entre l'élément de sortie de couple 6 définissant le porte-disque de sortie de l'embrayage E1 et l'élément de sortie de couple 7 définissant le porte-disque de sortie de l'embrayage E2 afin de pouvoir transmettre une charge axiale entre les deux porte-disques de sortie qui peuvent tourner à des vitesses différentes lorsque les premier et deuxième embrayages E1, E2 sont configurés dans une configuration différente

Enfin un troisième palier axial 103 est interposé entre l'élément de sortie de couple 7 de l'embrayage E2 et le moyeu principal 80.

Avantageusement, les paliers 101, 102, 103, 104 sont des paliers à roulement avec un premier et deuxième disque entre lesquels est disposée une pluralité de corps de roulement.

Dans l'exemple considéré, le dispositif comprend également une roue dentée 51. La roue dentée 51 et le support 52 formant ensemble un grand pignon 50. Le grand pignon 50 est en rotation autour d'un axe X relié sélectivement à l'élément d'entrée 2 par l'embrayage d'entrée 10.

Le dispositif comprend également un petit pignon 55 en rotation avec une machine électrique tournante (non visible sur la figure) autour d'un axe parallèle à l'axe de rotation X, le petit et grand pignon 50, 55 formant un engrenage.

Dans l'exemple considéré la roue dentée 51 et le support 52 forment deux sous-éléments assemblés entre eux, par exemple par soudure. En variante, la roue dentée 51 et le support 52 ne forment qu'une seule et même pièce.

Le support 52, qui correspond dans l'exemple considéré au support de la roue dentée 51, présente trois parois radiales 52a, 52b et 52c, reliées entre-elles par des parois axiales. La première paroi radiale 52a est disposée axialement entre la première paroi fixe 27 et l'embrayage d'entrée 10. La deuxième paroi radiale 52b est disposée axialement entre l'embrayage d'entrée 10 et la roue dentée 51. La troisième paroi radiale 52c est disposée axialement entre les embrayages de sortie E1, E2 et une deuxième paroi fixe 28 de la machine électrique. Ainsi, la paroi radiale 52a est située à l'avant tandis que la troisième paroi radiale 52c est située à l'arrière. La deuxième paroi radiale 52b est comprise dans un dos 52' qui relie ces deux parois 52a, 52c. L'ensemble du support 52 formant une cloche enveloppant au moins en partie les sous-ensemble A, B, C, en particulier l'intégralité de tous les embrayages 10, E1 et E2.

La roue dentée 51 du grand pignon 50 présente une denture hélicoïdale de forme complémentaire au petit pignon 55 de la machine électrique tournante (non représenté).

L'invention concerne donc également un module de transmission hybride comprenant le dispositif de transmission de couple selon la présente invention et une machine électrique tournante dite off-line. En effet, dans l'exemple considéré le support 52 est relié à la machine électrique tournante de sorte que l'axe de rotation de la machine électrique tournante soit décalé de l'axe de rotation X du dispositif de transmission de couple 1.

Le grand pignon 50 permet de transmettre le couple venant de la machine électrique tournante autour d'un axe parallèle à l'axe de rotation. Le grand pignon 50 est ici décalée axialement de l'embrayage 10. Le grand pignon 50, le premier embrayage de sortie E1 et le deuxième embrayage de sortie E2 sont empilés radialement en rapprochement de l'axe X. Le grand pignon est situé au droit des embrayages de sortie E1 et E2. La machine électrique est dite « off-line » car elle n'est pas concentrique à l'arbre de transmission mais sur un arbre parallèle. Le grand pignon 50 est apte à coopérer directement avec un petit pignon 55 de la machine électrique tournante.

Dans l'exemple considéré, le dispositif 1 de transmission de couple comprend en outre deux organes de roulement R1, R2 disposés au contact du support 52. De préférence, le premier organe de roulement R1 est disposé radialement entre l'extrémité intérieur de la première paroi radiale 52a du support 52 et l'élément d'entrée de couple 2 et le deuxième organe de roulement est disposé radialement entre l'extrémité intérieur de la troisième paroi radiale 52c du support 52 et le moyeu principal 80.

Le premier organe de roulement R1 comporte une bague intérieure en contact avec la première paroi fixe 27 et une bague extérieure en contact avec la première paroi radiale 52a du support 52. Le deuxième organe de roulement R2 comporte une bague extérieure en contact avec la troisième paroi radiale 52c du support 52 et une bague intérieure en contact avec la deuxième paroi fixe 28 de la machine électrique.

Les organes de roulement R1 et R2 sont ici des roulements à billes. Ces organes de roulement permettent ainsi de centrer le support 52 et de reprendre les efforts axiaux, radiaux et tangents dus au passage de couple dans le grand pignon.

Selon la présente invention, le dispositif 1 de transmission de couple comprend au moins un élément de calage 71, 72, 73, 74, 75 disposé à l'intérieur du support 52, c'est-à-dire dans le volume interne et configuré pour limiter le déplacement des sous-ensembles A, B, C les uns par rapport aux autres.

Sur la figure sont représentées plusieurs positions possibles des éléments de calage. Avantageusement, le dispositif 1 comprend un ou deux éléments de calage, de préférence un choisi parmi les éléments de calage axial 71, 72, 73, 74, 75.

Dans l'exemple considéré, les éléments de calage sont soit fixés sur le support 52 (par exemple les éléments 71, 72, 73) soit fixés sur un élément solidaire en rotation du moyeu principal 80 et appartenant au troisième sous-ensemble C (par exemple les éléments 71, 72, 73, 74, 75). Chaque élément de calage peut être fixé sur l'une ou l'autre des pièces qu'il sépare.

Dans l'exemple considéré, chaque élément de calage 71, 72, 73, 74, 75 est une pièce séparée de celle sur laquelle il est fixé. Ainsi, il s'agit de deux pièces assemblées entres elles, par exemple par soudure. En variante, chaque élément de calage 71, 72, 73, 74, 75 d'une part et le support 52 ou l'élément solidaire en rotation du moyeu principal 80 et appartenant au troisième sous-ensemble C sur lequel est fixé l'élément de calage d'autre part forment une seule et même pièce.

L'assemblage peut être définitif ou temporaire, à savoir que lorsque qu'il est temporaire il doit satisfaire les exigences fonctionnelles avant et après assemblage.

Dans l'exemple considéré, l'élément de calage 71, 72, 73 est disposé dans un espace située axialement entre une paroi radiale 52b, 52c du support 52 et une pièce lui faisant face axialement. La pièce qui fait face axialement à la paroi radiale 52b, 52c du support 52 est un élément solidaire en rotation du moyeu principal 80 et appartenant au troisième sous-ensemble C.

Sur la figure 1, l'élément solidaire en rotation du moyeu principal 80 et appartenant au troisième sous-ensemble C est choisi parmi le porte disque d'entrée 5, un moyen de rattrapage du désalignement 56 et une paroi 90 de la chambre d'équilibrage du deuxième embrayage de sortie E2.

Le moyen de rattrapage du désalignement 56 permet de rattraper le désalignement entre le grand pignon 50 et le porte-disque d'entrée 5 commun aux deux embrayages de sortie E1, E2.

L'élément de calage 74 et/ou 75 permet d'assurer en comblant le jeu que le troisième sous-ensemble C est plaqué sur le deuxième sous-ensemble B et que ce dernier est lui-même plaqué sur l'élément d'entrée de couple 2. Dans un tel cas, les paliers 101, 102, 103 sont protégés mais l'ensemble ainsi constitué peut bouger et mettre le palier 104 dans une position non conforme à une utilisation future du dispositif. Un élément de calage 71, 72 et/ou 73 est alors recommandé, de préférence nécessaire afin de bloquer les trous ensembles A, B, C contre la première paroi fixe 27.

Dans l'exemple considéré, l'élément de calage 74 est fixé sur le porte disque d'entrée 11 de l'embrayage d'entrée 10 ou sur le porte disque de sortie 12 de l'embrayage d'entrée 10. L'élément de calage 75 est quant à lui fixé sur le voile d'entrée 5 ou sur le porte disque de sortie 12 de l'embrayage d'entrée 10.

Le porte disque de sortie 12 et le porte disque d'entrée 5 commun aux deux embrayages de sortie E1, E2 formant une seule et même pièce.

Le grand pignon 50 ayant au moins un logement dans lequel est ménagée de manière complémentaire au moins une excroissance du moyen de rattrapage 56 afin que ces deux éléments s'imbriquent l'un dans l'autre. L'excroissance est en saillie du moyen de rattrapage 56 et peut présenter une forme générale sensiblement en « Ω ». Le moyen de rattrapage peut comporter entre une et cents excroissances, de préférence entre une et dix excroissances. Le moyen de rattrapage comporte de préférence huit excroissances. Les excroissances sont situées sur le pourtour externe du moyen de rattrapage 56. En conséquence, le grand pignon peut comporter entre un et cents logements, de préférence entre un et dix logements, de préférence huit. Les logements peuvent être situées sur le pourtour interne du grand pignon 50.

Avantageusement, le grand pignon 50 et le porte-disque d'entrée 5 sont assemblés avec un jeu radial et/ou axial et/ou angulaire. Avantageusement, le jeu radial est compris entre 0,1 et 1 mm, de préférence, le jeu radial est de 0.5mm. Ce jeu permet le rattrapage du désalignement radial entre ces deux pièces de manière à ce que la rotation et le couple du grand pignon 50 soit transmise à l'arbre d'entrée de la boîte de vitesses sans contraintes.

## Revendications

1. Dispositif (1) de transmission de couple, notamment pour véhicule automobile, comprenant :
- un premier sous-ensemble (A) comprenant un embrayage d'entrée (10) et un élément d'entrée de couple (2) en rotation autour d'un axe (X), apte à être couplé en rotation à un vilebrequin d'un moteur thermique,
- un support (52) solidaire en rotation d'une machine électrique, ledit support (52) étant relié sélectivement à l'élément d'entrée (2) par l'embrayage d'entrée (10),
- un deuxième sous-ensemble (B) comprenant un premier et un deuxième élément de sortie de couple (6, 7), aptes à être couplés respectivement en rotation à un premier et un deuxième arbre d'entrée d'une boite de vitesses,
- un troisième sous-ensemble (C) comprenant un moyeu principal (80), un premier et un deuxième embrayage de sortie (E1, E2) agencés entre l'élément d'entrée de couple (2) et les éléments de sortie de couple (6, 7) au sens de la transmission de couple, ledit support (52) formant une cloche enveloppant au moins en partie lesdits sous-ensemble (A, B, C)
**caractérisé en ce qu'**il comprend au moins un élément de calage (71, 72, 73, 74, 75) disposé à l'intérieur du support (52) et configuré pour limiter le déplacement des sous-ensembles (A, B, C) les uns par rapport aux autres.

2. Dispositif (1) de transmission de couple selon la revendication précédente, **caractérisé en ce que** l'au moins un élément de calage (71, 72, 73, 74, 75) est fixé sur le support (52) ou sur un élément solidaire en rotation du moyeu principal (80) et appartenant au troisième sous-ensemble (C).

3. Dispositif (1) de transmission de couple selon la revendication précédente, **caractérisé en ce que** l'au moins un élément de calage et le support (52) ou l'au moins un élément de calage et l'élément solidaire en rotation du moyeu principal (80) et appartenant au troisième sous-ensemble (C) forment une seule et même pièce ou deux pièces solidaires.

4. Dispositif (1) de transmission de couple selon l'une quelconque des revendications précédentes, **caractérisé en ce que** l'au moins un élément de calage est disposé dans un espace située axialement entre une paroi radiale (52a, 52b, 52c) du support (52) et une pièce lui faisant face axialement.

5. Dispositif (1) de transmission de couple selon la revendication précédente, **caractérisé en ce que** la pièce faisant face axialement à la paroi radiale (52b, 52c) du support (52) est un élément solidaire en rotation du moyeu principal (80) et appartenant au troisième sous-ensemble (C).

6. Dispositif (1) de transmission de couple selon la revendication 2, **caractérisé en ce que** l'élément solidaire en rotation du moyeu principal (80) et appartenant au troisième sous-ensemble (C) est choisi parmi un porte disque d'entrée (5), un moyen de rattrapage du désalignement (56) et une paroi (90) d'une chambre d'équilibrage du deuxième embrayage de sortie (E2).

7. Dispositif (1) de transmission de couple selon l'une quelconque des revendications précédentes, caractérisé en ce le support (52) enveloppe intégralement l'embrayage d'entrée (10) et le premier et deuxième embrayage de sortie (E1, E2)

8. Dispositif (1) de transmission de couple selon l'une quelconque des revendications précédentes, **caractérisé en ce qu'**il comprend en outre une roue dentée (51), ladite roue dentée (51) et le support (52) formant ensemble un grand pignon (50).

9. Dispositif (1) de transmission de couple selon l'une quelconque des revendications précédentes, **caractérisé en ce qu'**il comprend en outre deux organes de roulement (R1, R2) disposés au contact du support (52).

10. Module de transmission hybride, **caractérisé en ce qu'**il comprend un dispositif (1) de transmission de couple selon l'une quelconque des revendications précédentes et une machine électrique tournante, le support (52) étant relié à la machine électrique tournante de sorte que l'axe de rotation de la machine électrique tournante soit décalé de l'axe de rotation (X) du dispositif de transmission de couple (1).

## Patentansprüche

1. Vorrichtung (1) zur Drehmomentübertragung, insbesondere für ein Kraftfahrzeug, welche umfasst:
- eine erste Unterbaugruppe (A), die eine Eingangskupplung (10) und ein um eine Achse (X) rotierendes Drehmoment-Eingangselement (2), das mit einer Kurbelwelle eines Verbrennungsmotors drehkoppelbar ist, umfasst,
- einen Träger (52), der mit einer elektrischen Maschine drehfest verbunden ist, wobei der Träger (52) durch die Eingangskupplung (10) selektiv mit dem Eingangselement (2) verbunden ist,
- eine zweite Unterbaugruppe (B), die ein erstes und ein zweites Drehmoment-Ausgangselement (6, 7) umfasst, die mit einer ersten bzw. einer zweiten Eingangswelle eines Getriebes drehkoppelbar sind;
- eine dritte Unterbaugruppe (C), die eine Hauptnabe (80) und eine erste und eine zweite Ausgangskupplung (E1, E2), die in der Richtung der Drehmomentübertragung zwischen dem Drehmoment-Eingangselement (2) und den Drehmoment-Ausgangselementen (6, 7) angeordnet sind, umfasst,
wobei der Träger (52) eine Glocke bildet, welche die Unterbaugruppen (A, B, C) wenigstens teilweise umhüllt,
**dadurch gekennzeichnet, dass** sie wenigstens ein Verkeilelement (71, 72, 73, 74, 75) umfasst, das im Inneren des Trägers (52) angeordnet ist und dafür ausgelegt ist, die Verlagerung der Unterbaugruppen (A, B, C) relativ zueinander zu begrenzen.

2. Vorrichtung (1) zur Drehmomentübertragung nach dem vorhergehenden Anspruch, **dadurch gekennzeichnet, dass** das wenigstens eine Verkeilelement (71, 72, 73, 74, 75) an dem Träger (52) oder an einem Element, das mit der Hauptnabe (80) drehfest verbunden ist und zur dritten Unterbaugruppe (C) gehört, befestigt ist.

3. Vorrichtung (1) zur Drehmomentübertragung nach dem vorhergehenden Anspruch, **dadurch gekennzeichnet, dass** das wenigstens eine Verkeilelement und der Träger (52) oder das wenigstens eine Verkeilelement und das Element, das mit der Hauptnabe (80) drehfest verbunden ist und zur dritten Unterbaugruppe (C) gehört, ein einziges Teil oder zwei fest miteinander verbundene Teile bilden.

4. Vorrichtung (1) zur Drehmomentübertragung nach einem der vorhergehenden Ansprüche, **dadurch gekennzeichnet, dass** das wenigstens eine Verkeilelement in einem Zwischenraum angeordnet ist, der sich axial zwischen einer radialen Wand (52a, 52b, 52c) des Trägers (52) und einem Teil, dass ihr axial zugewandt ist, befindet.

5. Vorrichtung (1) zur Drehmomentübertragung nach dem vorhergehenden Anspruch, **dadurch gekennzeichnet, dass** das Teil, das der radialen Wand (52b, 52c) des Trägers (52) axial zugewandt ist, ein Element ist, das mit der Hauptnabe (80) drehfest verbunden ist und zur dritten Unterbaugruppe (C) gehört.

6. Vorrichtung (1) zur Drehmomentübertragung nach Anspruch 2, **dadurch gekennzeichnet, dass** das Element, das mit der Hauptnabe (80) drehfest verbunden ist und zur dritten Unterbaugruppe (C) gehört, aus einem Eingangslamellenträger (5), einem Mittel zum Ausgleich der Fehlausrichtung (56) und einer Wand (90) einer Ausgleichskammer der zweiten Ausgangskupplung (E2) ausgewählt ist.

7. Vorrichtung (1) zur Drehmomentübertragung nach einem der vorhergehenden Ansprüche, **dadurch gekennzeichnet, dass** der Träger (52) die Eingangskupplung (10) und die erste und die zweite Ausgangskupplung (E1, E2) vollständig umhüllt.

8. Vorrichtung (1) zur Drehmomentübertragung nach einem der vorhergehenden Ansprüche, **dadurch gekennzeichnet, dass** sie außerdem ein Zahnrad (51) umfasst, wobei das Zahnrad (51) und der Träger (52) zusammen einen Zahnkranz (50) bilden.

9. Vorrichtung (1) zur Drehmomentübertragung nach einem der vorhergehenden Ansprüche, **dadurch gekennzeichnet, dass** sie außerdem zwei Wälzlagerorgane (R1, R2) umfasst, die im Kontakt mit dem Träger (52) angeordnet sind.

10. Hybrides Übertragungsmodul, **dadurch gekennzeichnet, dass** es eine Vorrichtung (1) zur Drehmomentübertragung nach einem der vorhergehenden Ansprüche und eine rotierende elektrische Maschine umfasst, wobei der Träger (52) mit der rotierenden elektrischen Maschine derart verbunden ist, dass die Drehachse der rotierenden elektrischen Maschine zur Drehachse (X) der Vorrichtung (1) zur Drehmomentübertragung versetzt ist.

## Claims

1. Torque transmission device (1), in particular for a motor vehicle, comprising:
- a first subassembly (A) comprising an input clutch (10) and a torque input element (2), rotating about an axis (X), that is able to be rotationally coupled to a crankshaft of a combustion engine,
- a support (52) that rotates as one with an electric machine, said support (52) being selectively connected to the input element (2) by the input clutch (10),
- a second subassembly (B) comprising a first and a second torque output element (6, 7) that are able to be rotationally coupled to a first and a second input shaft, respectively, of a gearbox,
- a third subassembly (C) comprising a main hub (80), a first and a second output clutch (E1, E2) that are arranged between the torque input element (2) and the torque output elements (6, 7) in the direction of torque transmission, said support (52) forming a bell housing that at least partially encloses said subassemblies (A, B, C),
**characterized in that** it comprises at least one wedging element (71, 72, 73, 74, 75) disposed inside the support (52) and configured to limit the displacement of the subassemblies (A, B, C) with respect to one another.

2. Torque transmission device (1) according to the preceding claim, **characterized in that** the at least one wedging element (71, 72, 73, 74, 75) is fixed on the support (52) or on an element that rotates as one with the main hub (80) and that forms part of the third subassembly (C).

3. Torque transmission device (1) according to the preceding claim, **characterized in that** the at least one wedging element and the support (52), or the at least one wedging element and the element that rotates as one with the main hub (80) and that forms part of the third subassembly (C), form a single part or two parts secured together.

4. Torque transmission device (1) according to any one of the preceding claims, **characterized in that** the at least one wedging element is disposed in a space situated axially between a radial wall (52a, 52b, 52c) of the support (52) and a part axially facing said radial wall.

5. Torque transmission device (1) according to the preceding claim, **characterized in that** the part axially facing the radial wall (52b, 52c) of the support (52) is an element that rotates as one with the main hub (80) and that forms part of the third subassembly (C).

6. Torque transmission device (1) according to Claim 2, **characterized in that** the element that rotates as one with the main hub (80) and that forms part of the third subassembly (C) is chosen from an input disc carrier (5), a means (56) for compensating for misalignment and a wall (90) of a balancing chamber of the second output clutch (E2).

7. Torque transmission device (1) according to any one of the preceding claims, **characterized in that** the support (52) completely encloses the input clutch (10) and the first and second output clutches (E1, E2).

8. Torque transmission device (1) according to any one of the preceding claims, **characterized in that** it furthermore comprises a toothed wheel (51), said toothed wheel (51) and the support (52) together forming a large pinion (50).

9. Torque transmission device (1) according to any one of the preceding claims, **characterized in that** it furthermore comprises two rolling bearing members (R1, R2) disposed in contact with the support (52).

10. Hybrid transmission module, **characterized in that** it comprises a torque transmission device (1) according to any one of the preceding claims and a rotating electric machine, the support (52) being connected to the rotating electric machine such that the axis of rotation of the rotating electric machine is offset from the axis of rotation (X) of the torque transmission device (1).
